# EUROPÄISCHE PATENTSCHRIFT

(11) **EP 3 707 471 B1**
(45) Veröffentlichungstag und Bekanntmachung des Hinweises auf die Patenterteilung: **25.12.2024**
(21) Anmeldenummer: 18796616.3
(22) Anmeldetag: 26.10.2018
(51) Int. Cl.: G01C 21/34

(54) **VERFAHREN ZUR FAHRZEUGNAVIGATION**
VEHICLE NAVIGATION METHOD
PROCÉDÉ DE NAVIGATION DE VÉHICULE

(30) Priorität: 10.11.2017 DE 102017220033
(43) Veröffentlichungstag der Anmeldung: 16.09.2020
(73) Patentinhaber: Volkswagen Aktiengesellschaft, 38440 Wolfsburg (DE)
(72) Erfinder: BRUNS, Christian, 38104 Braunschweig (DE); KRUSCHA, Tatjana, 38106 Braunschweig (DE); KWASNY, Julia, 38448 Wolfsburg (DE); OBERSCHACHTSIEK, André, 38116 Braunschweig (DE); RÖSSLER, Bernd, 38524 Sassenburg (DE); CASSEBAUM, Oliver, 38448 Wolfsburg (DE); ESATBEYOGLU, Enes, 38120 Braunschweig (DE); KEMPA, Jan, 38440 Wolfsburg (DE); SCHULZE, Frank, 38533 Vordorf (DE)
(86) Internationale Anmeldenummer: PCT/EP2018/079473
(87) Internationale Veröffentlichungsnummer: WO 2019/091805

(56) Entgegenhaltungen:
- US-A1- 2013 080 053
- US-A1- 2013 218 427
- US-A1- 2017 076 509

## Beschreibung

Die vorliegende Erfindung betrifft ein Verfahren zur Fahrzeugnavigation mit einem Navigationssystem eines Fahrzeuges.

Es ist bekannt, dass durch die zunehmende Verkehrsdichte insbesondere in Städten und Ballungsgebieten die hierdurch ansteigende Belastung durch Fahrzeugemissionen problematisch ist. Insbesondere wird es zukünftig erforderlich sein, Lösungen zur Reduzierung dieser Belastung zu finden, wobei gleichzeitig eine Beibehaltung oder Verbesserung der Mobilität und Infrastruktur wünschenswert ist.

Herkömmlicherweise erfolgt bereits eine Verkehrssteuerung, welche auf eine längerfristige Lärm- und/oder Luftgütemessung basiert.

Aus der US 2014/0039988 A1 ist ein Verfahren und System bekannt, welches einen Fahrer eines Fahrzeuges für die Nutzung umweltschonender Routen belohnt.

Aus der DE 10 2007 014 684 A1 geht ein Verfahren zur Durchführung einer Verkehrsflusssteuerung hervor.

Aus den Schriften US 2017/076509 A1, US 2013/218427 A1 und US 2013/080053 A1 sind weitere alternative Verfahren bekannt.

Hierbei ist ein Problem, dass aufgrund der statischen Natur bekannter Verkehrssteuerungslösungen lokal dennoch zu hohe Belastungswerte auftreten können. Auch zeigt sich, dass bekannte Lösungen zur Verkehrssteuerung gegebenenfalls unflexibel und unzuverlässig sein können. Es ist daher eine Aufgabe der vorliegenden Erfindung, die voranstehend beschriebenen Nachteile zumindest teilweise zu reduzieren. Insbesondere ist es eine Aufgabe der vorliegenden Erfindung, ein verbessertes Verfahren zur Reduzierung der Umweltbelastung vorzuschlagen.

Die voranstehende Aufgabe wird gelöst durch ein Verfahren mit den Merkmalen des Anspruchs 1. Weitere Merkmale und Details der Erfindung ergeben sich aus den jeweiligen Unteransprüchen, der Beschreibung und den Zeichnungen.

Die Aufgabe wird insbesondere gelöst durch ein Verfahren zur Fahrzeugnavigation. Hierbei kommt ein Navigationssystem zum Einsatz, welches zur Ermittlung von wenigstens einer Route und zur Navigation anhand dieser ermittelten Route in Abhängigkeit von einem Standort eines Fahrzeuges dient. Das Navigationssystem kann hierbei im Fahrzeug integriert sein, z. B. fest mit der Fahrzeugelektronik verbunden sein. Das Fahrzeug ist bspw. ein Kraftfahrzeug und/oder ein Personenkraftfahrzeug und/oder ein Elektrofahrzeug und/oder dergleichen.

Es ist dabei möglich, dass die nachfolgenden Schritte durchgeführt werden, ggf. in beliebiger Reihenfolge oder nacheinander, wobei einzelne Schritte auch wiederholt werden können:
- Durchführen einer Erfassung von wenigstens einer Umgebungseigenschaft (also einer erfassbaren Eigenschaft, z. B. physikalischen Größe, einer Umgebung des Fahrzeuges), wobei vorzugsweise die Umgebungseigenschaft für wenigstens eine Emission des Fahrzeuges spezifisch ist, wobei bevorzugt die Erfassung durch wenigstens einen Sensor des Fahrzeuges durchgeführt wird, sodass ein Erfassungsergebnis bestimmt wird,
- Durchführen einer Auswertung des Erfassungsergebnisses, sodass ein Auswertungsergebnis bestimmt wird,
- Durchführen einer Routenanpassung der ermittelten Route während der Navigation anhand des Auswertungsergebnisses.

Optional können die Schritte zumindest teilweise durch das Navigationssystem durchgeführt werden. Es kann möglich sein, dass zur Durchführung der Routenanpassung zunächst ein Hinweis an einen Fahrer ausgegeben wird und/oder die geeigneten (alternativen) Routen angezeigt werden und/oder eine Bestätigung des Fahrers zur Anpassung notwendig ist. Als Route wird im Rahmen der Erfindung insbesondere ein Vorschlag und/oder Vorgabe für eine Wegstrecke des Fahrzeuges bezeichnet, welche zur Zielführung und/oder zur planmäßigen Bewegung des Fahrzeuges abhängig von vorgegebenen Kriterien dient. Das vorgegebene Kriterium kann durch einen Benutzer vorgegeben werden (z. B. schnellste Route, kürzeste Route, Route mit der geringsten Umweltbelastung). Hierzu kann die Route wenigstens einen berechneten Weg für das Fahrzeug aufweisen, welche bspw. ein Kartenmaterial und/oder Verkehrswege für den aktuellen Standort des Fahrzeuges berücksichtigt.

Eine Route umfasst bspw. mehrere Teilrouten, welche Straßenabschnitten zugeordnet sein können, um von einem Anfangsort zu einem Zielort zu führen. Selbstverständlich sind meist unterschiedliche äquivalente Teilrouten verfügbar, um den Zielort zu erreichen, sodass zur aktuell ermittelten Route auch alternative Routen existieren (welche bspw. eine längere Fahrzeit oder Wegstrecke mit sich bringen oder dergleichen).

Das Erfassungsergebnis ist bspw. ein Messergebnis, also eine quantitative Aussage über die Umgebungseigenschaft. Als Sensor des Fahrzeuges kann hierzu bspw. ein Mikrofon (zur Lautstärkemessung) und/oder ein Feinstaubsensor (zur Messung der Feinstaubbelastung) zum Einsatz kommen. Die Auswertung kann dann vorteilhafterweise einen Vergleich dieses Erfassungsergebnisses (also bspw. wenigstens eines konkreten Messwertes) mit einem Schwellenwert umfassen, sodass eine übermäßige Belastung detektiert wird. Auch kann die Auswertung einen Vergleich des Erfassungsergebnisses mit weiteren Erfassungsergebnissen für andere Teilrouten (z. B. Straßenabschnitten) umfassen, insbesondere für äquivalente Teilrouten, welche ebenfalls zur Ermittlung einer alternativen Route dienen können. Die weiteren Erfassungsergebnisse werden bspw. durch externe Sensoren und/oder weitere Fahrzeuge ermittelt, und sind daher spezifisch für eine Belastung dieser Teilrouten mit der wenigstens einen Emission. Wenn nun eine (ggf. zu einer aktuellen Teilroute äquivalente) Teilroute existiert, welche eine geringere Belastung aufweist als der aktuelle Straßenabschnitt oder eine zukünftig geplante Teilroute der bereits ermittelten Route, kann dies durch das Auswertungsergebnis indiziert werden. Dann kann eine Routenanpassung durchgeführt werden, um die aktuelle Teilroute zu verändern und/oder eine geplante Teilroute gegen diejenige mit geringerer Belastung auszutauschen, und somit die Umweltbelastung zu reduzieren. Auch ist es möglich, dass zur Routenanpassung, und insbesondere der damit einhergehenden Ermittlung wenigstens einer äquivalenten Teilroute, eine Prognostizierung von wenigstens einer Belastungsinformation durchgeführt wird. So können z. B. Belastungen, welche zukünftig oder zur eingestellten Reisezeit an einer bestimmten Teilroute prognostiziert vorliegen, bspw. auch bezogen auf eine zeitliche Information wie Wochentagen, statistisch ermittelt werden. Auch die Belastungsinformation über diese Belastungen kann ggf. für die Auswertung herangezogen werden.

Die Umgebungseigenschaft kann für wenigstens eine Emission des Fahrzeuges spezifisch sein. Die Emission des Fahrzeuges ist dabei insbesondere eine Lärmemission (Schallemission des Fahrzeuges, bspw. durch einen Motor des Fahrzeuges) oder eine gas- und/oder feinstaubförmige Schadstoffemission (besonders relevant ist hier der Feinstaub, welcher durch das Fahrzeug emittiert wird). Als weitere Emissionen sind flüssige Emissionen, staubförmige Emissionen, Lichtemissionen oder dergleichen denkbar. Ziel der Erfassung der Umgebungseigenschaft kann es in erster Linie sein, eine Lärm- und/oder Luftgüte der Fahrzeugumgebung zu bewerten. Die hierbei ermittelten Werte (also das Erfassungsergebnis) können als Grundlage für eine Routenanpassung dienen (also für eine regelmäßige ggf. instantane Routenberechnung des Navigationssystems zur Anpassung der aktuellen Route und/oder Auswahl von alternativen Teilrouten). Von Vorteil ist es hierbei, wenn die Routenanpassung zur Vermeidung und/oder Reduzierung von erhöhten und/oder überhöhten Werten der Umgebungseigenschaft dient (im Sinne einer Verkehrssteuerung und/oder eines Verkehrsmanagements). In anderen Worten kann eine Belastung von Teilrouten (z. B. Straßenabschnitten) reduziert werden, indem durch die Routenanpassung eine Auswahl einer alternativen (und zumindest teilweise äquivalenten) Teilroute mit geringerer Belastung erfolgt. Damit können bspw. Fahrzeuge dorthin umgeleitet werden, wo relativ zu anderen Straßen geringere Werte für Lärm- und Luftgüte bzw. Feinstaub vorliegen. Äquivalent bezieht sich dabei bevorzugt darauf, dass unterschiedliche äquivalente Teilrouten stets einen gleichen Anfangs-und Zielort haben, wobei ggf. mehrere Teilrouten eine gesamte Route der Navigation bildet. Unter Belastung wird hierbei die Belastung durch die wenigstens eine Emission verstanden, wobei ein Belastungswert hierfür spezifisch sein kann. Dieser sollte (z. B. in Abhängigkeit von gesetzlichen Vorgaben) unterhalb eines bestimmten erlaubten Wertes liegen. Der Belastungswert kann für die unmittelbare Fahrzeugumgebung z. B. anhand des Erfassungsergebnisses bestimmt werden, und für weitere Umgebungen und/oder Teilrouten z. B. extern anhand einer Erfassung durch andere Fahrzeuge und/oder Sensoren in der Umwelt bestimmt werden. Weiter kann der extern bestimmte Belastungswert ggf. über eine Datenübertragung an eine externe Datenverarbeitungsvorrichtung und/oder an das Fahrzeug übertragen werden, um die Auswertung durchführen zu können.

Eine Besonderheit kann erfindungsgemäß sein, dass die Routenanpassung während der Fahrt und/oder in regelmäßigen Abständen zumindest teilweise automatisiert durchgeführt wird. Insbesondere kann die Routenanpassung auch unabhängig von einer Navigation zu einem bestimmten Ziel erfolgen. Damit ist gemeint, dass nicht zwangsläufig eine manuell gestartete Ziel-Navigation durch das Navigationssystem erfolgen muss, damit eine Routenanpassung durchgeführt wird. Auch ohne die Vorgabe eines konkreten Ziels kann das Navigationssystem z. B. vorausliegende Straßenabschnitte bestimmen und hinsichtlich der Belastung auswerten. Anschließend kann im Falle einer Routenanpassung ein Hinweis an den Fahrer ausgegeben werden, dass eine Umleitung empfohlen wird, bspw. wenn der Fahrer gerade in eine stark belastete Straße einbiegen möchte. Somit kann in anderen Worten eine instantane Routenüberwachung und Routenanpassung unabhängig von einer Navigation zu einem konkreten Ziel während der Fahrt durchgeführt werden. Auch dies wird im Rahmen des erfindungsgemäßen Verfahrens als "Navigation" verstanden, und hat den Vorteil, dass eine besonders umweltschonende und die Gesundheit des Fahrers schonende Fahrt ermöglicht wird. Um die wenigstens eine Emission des Fahrzeuges zu bewerten, kann die Umgebungseigenschaft durch wenigstens einen Sensor des Fahrzeuges erfasst werden. Die Umgebungseigenschaft ist für die wenigstens eine Emission spezifisch, bietet also z. B. einen Hinweis auf einen Grad der Belastung (z. B. als Belastungswert) durch die Emission und/oder ist davon abhängig, bspw. auch im Wesentlichen proportional davon abhängig. Als Beispiele für mögliche Umgebungseigenschaften können ein CO2 und/oder NO2 Gehalt der Luft und/oder ein Lautstärkepegel und/oder dergleichen genannt werden. Dabei ist es insbesondere vorgesehen, dass der Grad der Belastung, welcher anhand der wenigstens einen Umgebungseigenschaft bestimmt werden kann, nicht zwangsläufig durch das Fahrzeug oder durch andere Fahrzeuge verursacht worden sein muss, damit die Umgebungseigenschaft für die Emission des Fahrzeuges spezifisch ist. So können bspw. auch andere Ursachen, wie ein Feuer oder dergleichen, für einen hohen Wert (insbesondere Belastungswert) der Umgebungseigenschaft kausal sein. Daneben können ggf. auch weitere Umgebungseigenschaften für die Auswertung herangezogen werden, welche nicht spezifisch für das Fahrzeug sind (z. B. eine Wetter- und/oder Zeitinformation oder dergleichen). Es kann auch möglich sein, dass ausschließlich solch eine oder mehrere Umgebungseigenschaften vorgesehen sind, welche kausal durch das Fahrzeug beeinflusst werden.

Des Weiteren ist es bei dem erfindungsgemäßen Verfahren denkbar, dass die Auswertung des Erfassungsergebnisses zumindest teilweise durch eine Datenverarbeitungsvorrichtung außerhalb des Fahrzeuges durchgeführt wird, und hierzu das Erfassungsergebnis und/oder ein Zwischenergebnis einer Vorauswertung des Erfassungsergebnisses drahtlos an die Datenverarbeitungsvorrichtung übermittelt wird. "Drahtlos" bezieht sich hierbei darauf, dass wenigstens ein Übertragungsabschnitt der Datenübertragung nicht kabelgebunden, also insbesondere über Funk, erfolgt, und somit der freie Raum als Übertragungsmedium genutzt wird. Es kann von Vorteil sein, dass eine zumindest teilweise Auswertung auch bereits im Fahrzeug erfolgt, z. B. durch eine Fahrzeugelektronik und/oder durch das Navigationssystem. Diese kann als Vorauswertung ausgeführt sein, sodass ein Zwischenergebnis bestimmt wird. Alternativ kann die Auswertung auch vollständig durch die Datenverarbeitungsvorrichtung und/oder durch weitere externe Geräte ausgeführt werden. Hierzu muss das Erfassungsergebnis, wie Messwerte der Erfassung oder dergleichen, an die Datenverarbeitungsvorrichtung und/oder die externen Geräte übertragen werden. Dazu können eine Vielzahl von Schnittstellen des Fahrzeuges eingesetzt werden, z. B. eine Mobilfunkschnittstelle und/oder eine WLAN-Schnittstelle und/oder eine sonstige Funkschnittstelle, wobei die Datenübertragung ggf. auch über ein Mobilfunktelefon und/oder das Internet erfolgt. Die Datenverarbeitungsvorrichtung kann hierdurch in einfacher Weise als zentraler Backend für die Auswertung des Erfassungsergebnisses genutzt werden, wodurch eine umfangreichere und aufwendigere Verarbeitung des Erfassungsergebnisses möglich ist. Bspw. ist die Datenverarbeitungsvorrichtung als wenigstens ein Computer und/oder Server oder dergleichen ausgebildet.

Es ist optional möglich, dass die Auswertung vollständig durch das Navigationssystem des Fahrzeuges durchgeführt wird. Somit ist eine Routenanpassung autonom durch das Fahrzeug möglich.

Ferner ist es denkbar, dass die wenigstens eine Umgebungseigenschaft für eine Luftgüte und/oder für eine Lärmgüte und/oder für eine Feinstaubemission in der Umgebung des Fahrzeuges spezifisch ist. In anderen Worten kann die wenigstens eine Umgebungseigenschaft für eine solche Emission dadurch spezifisch sein, dass sie eine quantitative Aussage über wenigstens ein Gas in der Luft und/oder eine sonstige Auswirkung der Emission (wie eine Lautstärke) ermöglicht. Damit kann zuverlässig die Belastung der Umgebung (also der aktuellen Teilroute des Fahrzeuges) bestimmt werden.

Ein weiterer Vorteil kann im Rahmen der Erfindung erzielt werden, wenn die Routenanpassung während der Fahrt des Fahrzeuges automatisiert regelmäßig durch das Navigationssystem durchgeführt wird. Insbesondere bietet es sich bei autonom fahrenden Fahrzeugen an, die Routenanpassung direkt automatisch vornehmen zu lassen. Auch kann es möglich sein, dass zur Routenanpassung eine alternative (Teil-) Route dem Fahrer vorgeschlagen wird. Hierdurch kann schnell und mit hoher Effizienz eine Reduzierung der Emissionen erreicht werden.

Des Weiteren ist es bei dem erfindungsgemäßen Verfahren optional möglich, dass die Auswertung ein Vergleichen von wenigstens zwei alternativen Teilrouten, insbesondere Straßenabschnitten, umfasst, wobei das Vergleichen in Abhängigkeit von einer Belastungsinformation über eine Belastung dieser Teilrouten mit der wenigstens einen Emission erfolgt. Alternativ oder zusätzlich zu den Belastungsinformationen ist es auch denkbar, dass zumindest eine weitere Information über die Teilrouten ermittelt und/oder bei der Auswertung berücksichtigt wird. Dies können z. B. Informationen wie Wetterdaten (Schnee, Regen, Nebel, Helligkeit) und/oder eine Tageszeit und/oder dergleichen für die Teilrouten sein. Damit kann auch verhindert werden, dass Fahrzeuge auf potentiell gefährlichen Straßen umgeleitet werden.

Erfindungsgemäß ist es vorgesehen, dass die Auswertung eine Analyse des Erfassungsergebnisses umfasst, um die ermittelte Route derart anzupassen, dass die Belastung der Route mit der wenigstens einen Emission minimiert wird, wobei eine umweltfreundliche Route berechnet wird, bei welcher die Route anhand von Streckenabschnitten (Teilrouten) optimiert wird, welche im Verhältnis zu anderen Streckenabschnitten geringere Belastungswerte aufweisen. Hierzu kann bspw. ein Optimierungsalgorithmus und/oder eine statistische Verarbeitung und/oder dergleichen eingesetzt werden. Es kann möglich sein, dass ein Nachweis der durch das Fahrzeug genommenen Routen persistent gespeichert und/oder an die Datenverarbeitungsvorrichtung übertragen wird, um daraus Informationen über eine Routenhistorie zu gewinnen und ggf. den Fahrzeughalter für umweltschonendes Fahren zu belohnen.

Ein weiterer Vorteil kann erzielt werden, wenn die Auswertung in Abhängigkeit von wenigstens einer Belastungsinformation erfolgt, welche außerhalb des Fahrzeuges für alternative Teilrouten ermittelt und an eine Datenverarbeitungsvorrichtung außerhalb des Fahrzeuges und/oder eine Sende-Empfangsvorrichtung des Fahrzeuges übertragen wird, und für eine aktuelle Belastung der Teilrouten mit der wenigstens einen Emission spezifisch ist. Die Belastungsinformation wird bspw. dadurch ermittelt, dass andere Fahrzeuge in den jeweiligen Teilrouten eine Erfassung wenigstens einer Umgebungseigenschaft (insbesondere im Sinne des erfindungsgemäßen Verfahrens) durchführen. Hierzu können jeweils ermittelte Erfassungsinformationen ausgewertet werden, sodass eine jeweilige Belastungsinformation bestimmt wird. Damit kann besonders zuverlässig eine Route ermittelt werden, welche effizient die Belastung reduziert.

Ferner kann es im Rahmen der Erfindung vorgesehen sein, dass das Auswertungsergebnis an eine Datenverarbeitungsvorrichtung außerhalb des Fahrzeuges übertragen wird, um eine lokale Verkehrslenkung anzupassen. Die lokale Verkehrslenkung umfasst z. B. Maßnahmen und/oder Steuerungen, welche außerhalb des Fahrzeuges vorgenommen werden, z. B. bei Ampelsystemen, digitalen Verkehrsschildern oder dergleichen. Es soll hierdurch also nicht nur die Route des Fahrzeuges, sondern auch anderer Fahrzeuge beeinflusst werden. Bei hohen Belastungswerten können ggf. stark betroffene Streckenabschnitte (Teilrouten) gesperrt werden oder nur Fahrzeuge zugelassen werden, welche die Lärm- und Luftgüte lokal nicht weiter vergrößern (z. B. Fahrzeuge mit einem Elektroantrieb). Eine solche Beeinflussung der Verkehrslenkung kann z. B. durch eine Datenübertragung zwischen den Fahrzeugen und/oder durch die Steuerung von elektronischen Wechselverkehrszeichen erfolgen. Bspw. kann das Erfassungsergebnis automatisch im Backend ausgewertet werden und daraufhin eine zeitnahe automatische Reaktion der lokalen Infrastruktur der betroffenen Gebiete erfolgen, also die Verkehrslenkung durchgeführt werden. Auch kann es vorgesehen sein, dass anhand der Auswertung im Backend Meldungen mit Informationen über die Verkehrslenkung an das Fahrzeug und/oder weitere Fahrzeuge gesendet werden, z. B. welche Straßenabschnitte und Gegenden zu meiden sind. Gleichzeitig kann das Auswertungsergebnis dieser Auswertung genutzt werden, um eine Routenanpassung durchzuführen. Hierzu können z. B. alternative Routen berechnet und/oder einem Fahrer des Fahrzeuges vorgeschlagen werden, welche geeignet sind, die durch die Verkehrslenkung beeinflussten Teilrouten zu umgehen. Auch ist es denkbar, dass eine statistische Analyse des Auswertungsergebnisses durch das Navigationssystem erfolgt, um z. B. für die Routenanpassung zu bestimmen, an welchen Wochentagen zu welchen Zeiten mit einer geänderten Verkehrslenkung (z. B. durch Ampeln und/oder durch Einfahrtverbote) zu rechnen ist.

Des Weiteren kann vorgesehen sein, dass die lokale Verkehrslenkung durch eine Anpassung von Ampelschaltungen und/oder dynamischen Umleitungsschildern und/oder dynamischen Verkehrsschildern und/oder elektronischen Wechselverkehrszeichen und/oder dynamischen Geschwindigkeitsbegrenzungen und/oder dynamischen Geschwindigkeitsregelungen erfolgt, um das Fahrzeug und/oder weitere Fahrzeuge gezielt umzuleiten, sodass vorzugsweise die Belastung von Teilrouten und/oder der Fahrzeugumgebung mit der wenigstens einen Emission reduziert wird. Es kann also der Vorteil erzielt werden, dass anhand des Auswertungsergebnisses und/oder weiterer Auswertungsergebnisse weiterer Fahrzeuge, welche das erfindungsgemäße Verfahren anwenden, eine umfassende Bewertung der Belastung von verschiedenen Straßenabschnitten möglich ist. Die Verkehrslenkung kann dazu dienen, diese Belastung teilroutenübergreifend zu reduzieren.

Gemäß einem weiteren Vorteil kann vorgesehen sein, dass die Routenanpassung und/oder eine Beeinflussung einer lokalen Verkehrslenkung nur dann erfolgt, wenn ein von dem Erfassungsergebnis abhängiger Belastungswert einen erlaubten Wert übersteigt. Anhand des Erfassungsergebnisses kann somit ein Belastungswert ermittelt werden (z. B. ein Messergebnis, wie eine konkrete quantitative Belastung mit der entsprechenden Emission). Dieser kann dann mit einem vorgespeicherten Schwellenwert als erlaubter Wert verglichen werden, um zu entscheiden, ob eine Routenanpassung durchgeführt werden soll. Bei der Routenanpassung kann dann nach Teilrouten gesucht werden, welche eine geringere Belastung aufweisen, um die aktuelle (belastete) Teilroute mit dieser Teilroute geringerer Belastung für die Navigation zu ersetzen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Draufsicht auf ein Fahrzeug, welches zur Durchführung eines erfindungsgemäßen Verfahrens ausgeführt ist,
- Fig. 2: eine schematische Darstellung eines erfindungsgemäßen Verfahrensablaufs.

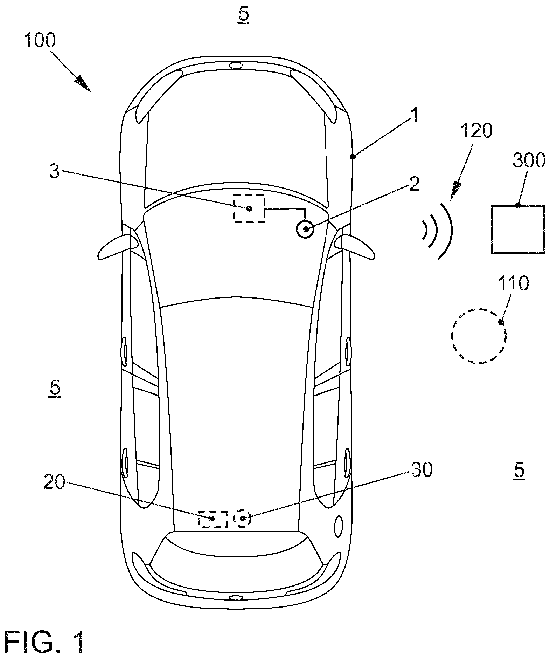

In Figur 1 ist schematisch ein Fahrzeug 1 in einer Draufsicht gezeigt. Das Fahrzeug umfasst dabei ein Navigationssystem 20, welches zur Ermittlung von wenigstens einer Route und Navigation anhand dieser ermittelten Route in Abhängigkeit von einem Standort des Fahrzeugs 1 ausgeführt ist.

Gemäß einem erfindungsgemäßen Verfahren 100 kann dabei eine Erfassung 210 von wenigstens einer Umgebungseigenschaft 110 durchgeführt werden. Dabei ist die Umgebungseigenschaft 110 für wenigstens eine Emission des Fahrzeuges 1 in einer Umgebung 5 des Fahrzeuges 1 spezifisch. Die Erfassung 210 kann durch wenigstens einen Sensor 30 des Fahrzeuges 1 durchgeführt werden, um ein Erfassungsergebnis 211 zu bestimmen.

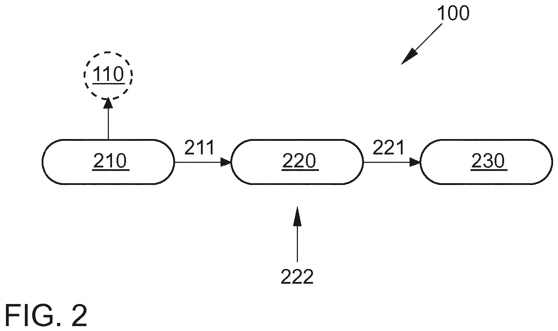

Anschließend ist es vorgesehen, dass eine Auswertung 220 des Erfassungsergebnisses 211 durchgeführt wird, um ein Auswertungsergebnis 221 zu bestimmen. Wie in Figur 2 gezeigt ist, umfasst die Auswertung 220 ein Vergleichen von wenigstens zwei alternativen Teilrouten, wobei das Vergleichen in Abhängigkeit von einer Belastungsinformation 222 über eine Belastung dieser Teilrouten mit der wenigstens einen Emission erfolgt. Die Belastungsinformation 222 kann beispielsweise über weitere Fahrzeuge auf diesen Teilrouten, das heißt anderen Straßenabschnitten, ermittelt werden.

Es sind mehrere Möglichkeiten denkbar, wie die Auswertung 220 durchgeführt wird. So kann die Auswertung 220 zumindest teilweise durch das Fahrzeug 1 (z. B. durch das Navigationssystem 20) und/oder zumindest teilweise extern vom Fahrzeug 1 durch eine Datenverarbeitungsvorrichtung 300 durchgeführt werden. Falls die Auswertung 220 extern durchgeführt werden soll und/oder wenn eine Belastungsinformation 222 von anderen Fahrzeugen berücksichtigt werden soll, ist eine Datenübertragung 120 notwendig. Für diese kann z. B. eine Sende-Empfangsvorrichtung 2 des Fahrzeuges 1 zur Funkkommunikation vorgesehen sein. Des Weiteren kann die Sende-Empfangsvorrichtung 2 mit einer Auswertevorrichtung 3 einer Fahrzeugelektronik elektrisch verbunden sein, um die Daten an die Auswertevorrichtung 3 zu übertragen und/oder auszuwerten. Anschließend kann das Auswertungsergebnis 221 genutzt werden, um eine Routenanpassung 230 durchzuführen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung, die durch die beigefügten Ansprüche definiert wird, zu verlassen.

### Bezugszeichenliste

- 1: Fahrzeug
- 2: Sende-Empfangsvorrichtung
- 3: Auswertevorrichtung
- 5: Umgebung

- 20: Navigationssystem

- .30: Sensor

- 100: Verfahren
- 110: Umgebungseigenschaft

- 120: Datenübertragung

- 210: Erfassung
- 211: Erfassungsergebnis

- 220: Auswertung
- 221: Auswertungsergebnis
- 222: Belastungsinformation
- 230: Routenanpassung

- 300: Datenverarbeitungsvorrichtung

## Patentansprüche

1. Verfahren (100) zur Fahrzeugnavigation mit einem Navigationssystem (20) eines Fahrzeuges (1) zur Ermittlung von wenigstens einer Route und Navigation anhand dieser ermittelten Route in Abhängigkeit von einem Standort des Fahrzeuges (1), **wobei die nachfolgenden Schritte durchgeführt werden:**
- Durchführen einer Erfassung (210) von wenigstens einer Umgebungseigenschaft (110), wobei die Umgebungseigenschaft (110) eine physikalische Größe ist, wobei die Umgebungseigenschaft (110) für wenigstens eine Emission des Fahrzeuges (1) spezifisch ist, wobei die Erfassung (210) durch wenigstens einen Sensor (30) des Fahrzeuges (1) durchgeführt wird, sodass ein Erfassungsergebnis (211) bestimmt wird, wobei das Erfassungsergebnis (211) ein Messergebnis ist,
- Durchführen einer Auswertung (220) des Erfassungsergebnisses (211), sodass ein Auswertungsergebnis (221) bestimmt wird, wobei die Auswertung (220) eine Analyse des Erfassungsergebnisses (211) umfasst, um die Route derart anzupassen, dass die Belastung der Route mit der wenigstens einen Emission minimiert wird, wobei eine umweltfreundliche Route berechnet wird, bei welcher die Route anhand von Teilrouten optimiert wird, welche im Verhältnis zu anderen Streckenabschnitten geringere Belastungswerte aufweisen,
- Durchführen einer Routenanpassung (230) der ermittelten Route während der Navigation anhand des Auswertungsergebnisses (221)..

2. Verfahren (100) nach Anspruch 1,
**dadurch gekennzeichnet,**
**dass** die Auswertung (220) des Erfassungsergebnisses (211) zumindest teilweise durch eine Datenverarbeitungsvorrichtung (300) außerhalb des Fahrzeuges (1) durchgeführt wird, und hierzu das Erfassungsergebnis (211) und/oder ein Zwischenergebnis einer Vorauswertung des Erfassungsergebnisses (211) drahtlos an die Datenverarbeitungsvorrichtung (300) übermittelt wird.

3. Verfahren (100) nach Anspruch 1 oder 2,
**dadurch gekennzeichnet,**
**dass** die wenigstens eine Umgebungseigenschaft (110) für eine Luftgüte und/oder Lärmgüte und/oder eine Feinstaubemission in der Umgebung (5) des Fahrzeuges (1) spezifisch ist, wobei die Routenanpassung zur Vermeidung und/oder Reduzierung von erhöhten und/oder überhöhten Werten der Umgebungseigenschaft ausgeführt ist, um das Fahrzeug dorthin umzuleiten, wo relativ zu anderen Straßen geringere Werte für Lärm- und Luftgüte bzw. Feinstaub vorliegen.

4. Verfahren (100) nach einem der vorhergehenden Ansprüche,
**dadurch gekennzeichnet,**
**dass** die Routenanpassung (230) während der Fahrt des Fahrzeuges (1) automatisiert regelmäßig durch das Navigationssystem (20) durchgeführt wird.

5. Verfahren (100) nach einem der vorhergehenden Ansprüche,
**dadurch gekennzeichnet,**
**dass** die Auswertung (220) ein Vergleichen von wenigstens zwei alternativen Teilrouten umfasst, wobei das Vergleichen in Abhängigkeit von einer Belastungsinformation (222) über eine Belastung dieser Teilrouten mit der wenigstens einen Emission erfolgt, wobei die Belastungsinformation (222) außerhalb des Fahrzeuges (1) für die alternativen Teilrouten ermittelt wird und an eine Datenverarbeitungsvorrichtung (300) außerhalb des Fahrzeuges (1) und/oder eine Sende-Empfangsvorrichtung (2) des Fahrzeuges (1) übertragen wird, und für die aktuelle Belastung der Teilrouten mit der wenigstens einen Emission spezifisch ist.

6. Verfahren (100) nach einem der vorhergehenden Ansprüche,
**dadurch gekennzeichnet,**
**dass** das Auswertungsergebnis (221) an eine Datenverarbeitungsvorrichtung (300) außerhalb des Fahrzeuges (1) übertragen wird, um eine lokale Verkehrslenkung zu anzupassen.

7. Verfahren (100) nach Anspruch 6,
**dadurch gekennzeichnet,**
**dass** die lokale Verkehrslenkung durch eine Anpassung von Ampelschaltungen und/oder dynamischen Umleitungsschildern und/oder dynamischen Verkehrsschildern und/oder elektronischen Wechselverkehrszeichen und/oder dynamischen Geschwindigkeitsbegrenzungen und/oder dynamischen Geschwindigkeitsregelungen erfolgt, um das Fahrzeug (1) und/oder weitere Fahrzeuge gezielt umzuleiten.

8. Verfahren (100) nach einem der vorhergehenden Ansprüche,
**dadurch gekennzeichnet,**
**dass** die Routenanpassung (230) und/oder eine Beeinflussung einer lokalen Verkehrslenkung nur dann erfolgt, wenn ein von dem Erfassungsergebnis (211) abhängiger Belastungswert einen erlaubten Wert übersteigt.

## Claims

1. Method (100) for vehicle navigation with a navigation system (20) of a vehicle (1) for determining at least one route and for navigation on the basis of this determined route according to a location of the vehicle (1), **in which the following steps are carried out**:
- carrying out a detection (210) of at least one environmental property (110), wherein the environmental property (110) is a physical quantity, wherein the environmental property (110) is specific to at least one emission of the vehicle (1), wherein the detection (210) is carried out by at least one sensor (30) of the vehicle (1) so that a detection result (211) is determined, wherein the detection result (211) is a measurement result,
- carrying out an evaluation (220) of the detection result (211) so that an evaluation result (221) is determined, wherein the evaluation (220) comprises an analysis of the detection result (211) in order to adapt the route in such a way that the loading of the route with the at least one emission is minimized, wherein an environmentally friendly route is calculated in which the route is optimized on the basis of partial routes which have lower loading values in relation to other route sections,
- carrying out a route adjustment (230) of the determined route during the navigation on the basis of the evaluation result (221).

2. Method (100) according to claim 1,
**characterized in that**
the evaluation (220) of the detection result (211) is carried out at least partially by a data processing device (300) outside the vehicle (1), and for this purpose the detection result (211) and/or an intermediate result of a preliminary evaluation of the detection result (211) is transmitted wirelessly to the data processing device (300).

3. Method (100) according to claim 1 or 2,
**characterized in that**
the at least one environmental property (110) is specific to an air quality and/or noise quality and/or a particulate matter emission in the environment (5) of the vehicle (1), wherein the route adaptation is designed to avoid and/or reduce elevated and/or excessive values of the environmental property in order to redirect the vehicle to where lower values for noise and air quality or particulate matter exist relative to other roads.

4. Method (100) according to any of the preceding claims,
**characterized in that**
the route adaptation (230) is carried out automatically and regularly by the navigation system (20) while the vehicle (1) is traveling.

5. Method (100) according to any of the preceding claims,
**characterized in that**
the evaluation (220) comprises a comparison of at least two alternative partial routes, wherein the comparison is carried out on the basis of loading information (222) about a loading of these partial routes with the at least one emission, wherein the loading information (222) is determined outside the vehicle (1) for the alternative partial routes and is transmitted to a data processing device (300) outside the vehicle (1) and/or a transceiver device (2) of the vehicle (1), and is specific to the current loading of the partial routes with the at least one emission.

6. Method (100) according to any of the preceding claims,
**characterized in that**
the evaluation result (221) is transmitted to a data processing device (300) outside the vehicle (1) in order to adapt local traffic control.

7. Method (100) according to claim 6,
**characterized in that**
the local traffic control is carried out by adapting traffic light phases and/or dynamic diversion signs and/or dynamic traffic signs and/or electronic variable message signs and/or dynamic speed limits and/or dynamic speed controls in order to divert the vehicle (1) and/or other vehicles in a targeted manner.

8. Method (100) according to any of the preceding claims,
**characterized in that**
the route adjustment (230) and/or an influence on local traffic control occurs only if a loading value dependent on the detection result (211) exceeds a permitted value.

## Revendications

1. Procédé (100) pour la navigation de véhicule avec un système de navigation (20) d'un véhicule (1) pour la détermination d'au moins un itinéraire et la navigation à l'aide dudit itinéraire déterminé en fonction d'un emplacement du véhicule (1), dans lequel les étapes suivantes sont réalisées :
- réalisation d'une détection (210) d'au moins une caractéristique d'environnement (110), dans lequel la caractéristique d'environnement (110) est une grandeur physique, dans lequel la caractéristique d'environnement (110) est spécifique d'au moins une émission du véhicule (1), dans lequel la détection (210) est réalisée par au moins un capteur (30) du véhicule (1), de sorte qu'un résultat de détection (211) est défini, dans lequel le résultat de détection (211) est un résultat de mesure,
- réalisation d'une évaluation (220) du résultat de détection (211), de sorte qu'un résultat d'évaluation (221) est défini, dans lequel l'évaluation (220) comprend une analyse du résultat de détection (211) afin d'adapter l'itinéraire de telle sorte que la charge de l'itinéraire avec l'au moins une émission est minimisée, dans lequel un itinéraire respectueux de l'environnement est calculé, lors duquel l'itinéraire est optimisé à l'aide d'itinéraires partiels qui présentent des valeurs de charge plus faibles par rapport à d'autres sections de chemin,
- réalisation d'une adaptation d'itinéraire (230) de l'itinéraire déterminé pendant la navigation à l'aide du résultat d'évaluation (221).

2. Procédé (100) selon la revendication 1,
**Caractérisé en ce que**
l'évaluation (220) du résultat de détection (211) est réalisée au moins partiellement par un dispositif de traitement de données (300) à l'extérieur du véhicule (1), et, à cet effet, le résultat de détection (211) et/ou un résultat intermédiaire d'une évaluation préalable du résultat de détection (211) sont transmis sans fil au dispositif de traitement de données (300).

3. Procédé (100) selon la revendication 1 ou 2,
**Caractérisé en ce que**
l'au moins une caractéristique d'environnement (110) est spécifique d'une qualité de l'air et/ou d'une qualité du bruit et/ou d'une émission de particules fines dans l'environnement (5) du véhicule (1), dans lequel l'adaptation d'itinéraire est réalisée pour éviter et/ou réduire des valeurs élevées et/ou excessives de la caractéristique d'environnement afin de dévier le véhicule vers l'endroit où des valeurs plus faibles de qualité du bruit et de l'air ou de particules fines existent par rapport à d'autres routes.

4. Procédé (100) selon l'une des revendications précédentes,
**Caractérisé en ce que**
l'adaptation d'itinéraire (230) est réalisée de manière automatisée et régulière par le système de navigation (20) pendant le trajet du véhicule (1).

5. Procédé (100) selon l'une des revendications précédentes,
**Caractérisé en ce que**
l'évaluation (220) comprend une comparaison d'au moins deux itinéraires partiels alternatifs, dans lequel la comparaison est effectuée en fonction d'informations de charge (222) concernant une charge desdits itinéraires partiels avec l'au moins une émission, dans lequel les informations de charge (222) sont déterminées à l'extérieur du véhicule (1) pour les itinéraires partiels alternatifs et sont transmises à un dispositif de traitement de données (300) à l'extérieur du véhicule (1) et/ou à un dispositif émetteur-récepteur (2) du véhicule (1), et sont spécifiques de la charge actuelle des itinéraires partiels avec l'au moins une émission.

6. Procédé (100) selon l'une des revendications précédentes,
**Caractérisé en ce que**
le résultat d'évaluation (221) est transmis à un dispositif de traitement de données (300) à l'extérieur du véhicule (1) afin d'adapter une gestion de trafic locale.

7. Procédé (100) selon la revendication 6,
**Caractérisé en ce que**
la gestion de trafic locale est effectuée par une adaptation de feux de circulation et/ou de panneaux de déviation dynamiques et/ou de panneaux de signalisation dynamiques et/ou de panneaux à messages variables électroniques et/ou de limitations de vitesse dynamiques et/ou de régulations de vitesse dynamiques afin de dévier de manière ciblée le véhicule (1) et/ou d'autres véhicules.

8. Procédé (100) selon l'une des revendications précédentes,
**Caractérisé en ce que**
l'adaptation d'itinéraire (230) et/ou une influence d'une gestion de trafic locale ne sont effectuées que lorsqu'une valeur de charge dépendant du résultat de détection (211) dépasse une valeur autorisée.
